# EUROPEAN PATENT APPLICATION

(11) **EP 1 772 682 A2**
(43) Date of publication of application: **11.04.2007**
(21) Application number: 06020867.5
(22) Date of filing: 04.10.2006
(51) Int. Cl.: F24H 3/04

(54) **Electric heating modul for heating an air stream, in particular in vehicules**

(30) Priority: 05.10.2005 KR 20050093588
(71) Applicant: LG Electronics Inc., Yongdungpo-gu Seoul (KR); LG Chem, Ltd., Yongdungpo-Gu Seoul (KR)
(72) Inventor: Ryoo, Sung-Nam, Daejeon (KR); Park, Myung-Seok, Gwangmyeong, Gyeonggi-Do (KR)
(74) Representative: Urner, Peter

(57) **Abstract**

A heating and hot-water supplying system which includes a fuel cell and a boiler installed in either one of a home or a building. The fluid may be heated by reaction heat from the fuel cell and combustion heat from the boiler, and circulated to heat an inside of a floor of either one of the home or the building. Further, the reaction heat from the fuel cell and the combustion heat from the boiler may be used to heat water, thereby providing hot water to either one of a lavatory or a kitchen of the home or the building.

## Description

### RELATED APPLICATION

The present disclosure relates to subject matter contained in priority Korean Application No. 10-2005-0093588, filed on October 5, 2005, which is herein expressly incorporated by reference in its entirety.

### BACKGROUND OF THE INVENTION

### 1. Field of the Invention

The present invention relates to a heating and hot-water supplying system which utilizes a fuel cell. More particularly, the present invention relates to a heating and hot-water supplying system which, by utilizing a fuel cell, is capable of supplying electric energy to a home or a building, and capable of performing a heating operation and supplying hot water thereto by using the fuel cell and a boiler, thereby decreasing a usage amount of gas or oil.

### 2. Description of the Background Art

Oil, mainly used as an energy source, pollutes the environment and is running out due to an excessive demand thereof. In order to replace the fossil fuel, fuel cells are being developed.

These fuel cells serve to directly convert chemical energy into electrical energy. In this regard, the fuel cell electrochemically reacts a hydrogen-included fuel and an oxygen-included air with each other, and then directly converts an energy difference between prior to the reaction and after the reaction into electric energy. The fuel cell continuously generates electric energy while fuel and oxygen are supplied thereto, and generates heat and water as byproducts.

The fuel cells may include, by way of non-limiting example, at least one of a Phosphoric Acid Fuel Cell (PAFC), an Alkaline Fuel Cell (AFC), a Proton Exchange Membrance Fuel cell (PEMFC), a Molten Carbonate Fuel Cell (MCFC), a Solid Oxide Fuel Cell (SOFC), a Direct Methanol Fuel Cell (DMFC), etc.

According to at least one field of application, the fuel cell can be largely classified into a home fuel cell for supplying electricity to a home, a fuel cell for vehicles applied to an electric car, a small type fuel cell used in a portable electronic device such as a portable terminal and a notebook, etc.

The home fuel cell may serve, e.g., to supply electric energy to home electric appliances or home lighting devices.

In a cold area, or a country having seasonal variations (e.g. four seasons), a fossil fuel such as oil, gas, coal, etc. may be used for the indoor heating of a home or a building. In places such as Korea, a boiler system may be used for the indoor heating of a home or a building. Fuels such as gas, oil, etc., may be used in the boiler.

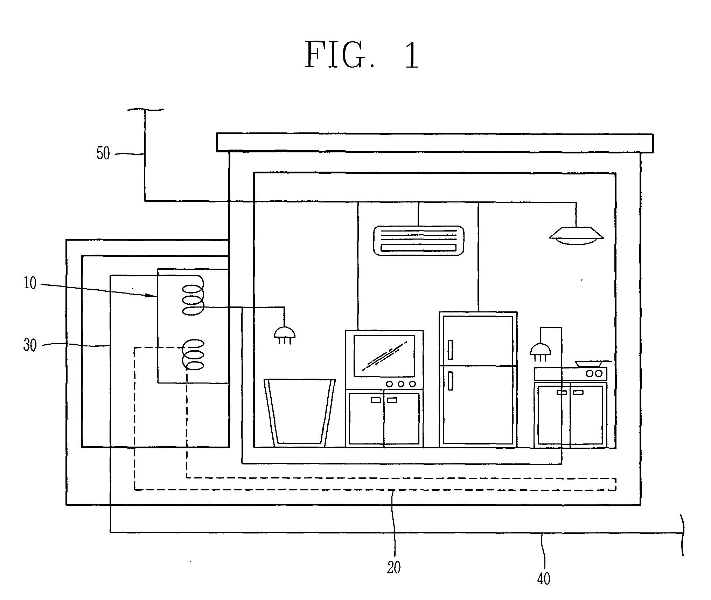

The general boil system will be explained with reference to FIG. 1. First, a boiler 10 installed outside a home or a building receives a fuel to combust. Water is heated by combustion heat of the boiler 10, and the heated water is circulated through a radiating line 20 connected to the boiler 10 and installed in a floor. Accordingly, as the system operates the water is heated by the boiler 10, and flows through the radiating line 20. The heating of the water is repeatedly performed, and heat is emitted to the indoor floor thereby heating the indoor floor.

A hot-water line 30 is connected to the boiler 10 and a tap water line 40 through which tap water is supplied. The tap water line 40 may be connected to, e.g., a lavatory room, a bathroom, a kitchen. Tap water supplied through the tap water line 40 is heated by the boiler 10, and then is supplied to the lavatory, the bathroom, or the kitchen through the hot-water line 30.

Reference numeral 50 denotes a power supplying line for supplying external power from a power plant.

However, in the related art boiler system, water is heated by combustion heat generated after combusting gas or oil, and the water is used to heat an indoor room or is utilized as hot water. Accordingly, a usage amount of the gas or oil is increased thereby causing pollutants which are harmful to a human's body, and economically burdening a home or a building. That is, the high price of the gas or oil, due to an increased demand, may inflict a great economic burden onto a home or a building.

### SUMMARY OF THE INVENTION

Therefore, an object of the present invention is to provide a heating and hot-water supplying system which, by utilizing a fuel cell, is capable of supplying electric energy to a home or a building, and is capable of performing a heating operation and supplying hot water thereto by using the fuel cell and a boiler, thereby decreasing a usage amount of gas or oil.

To achieve these and other advantages and in accordance with the purpose of the present invention, as embodied and broadly described herein, there is provided a heating and hot-water supplying system which utilizes a fuel cell. In this regard, a fuel cell and a boiler may be installed in a home or in a building, a fluid may be heated by reaction heat from the fuel cell and combustion heat from the boiler to circulate and heat an inside of a floor of the home or the building, and the reaction heat from the fuel cell and the combustion heat from the boiler may be used to heat tap water, thereby providing hot water to a lavatory or a kitchen of a home or a building.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The present invention is further described in the detail description which follows, in reference to the noted plurality of drawings, by way of non-limiting examples of preferred embodiments of the present invention, in which like characters represent like elements throughout the several views of the drawings, and wherein:
FIG. 1 is a piping diagram showing a home boiler system;
FIG. 2 is a piping diagram showing a heating and hot-water supplying system using a fuel cell according to a first embodiment of the present invention;
FIG. 3 is a piping diagram showing a heating and hot-water supplying system using a fuel cell according to a second embodiment of the present invention; and
FIG. 4 is a piping diagram showing a supplementary tank of the heating and hot-water supplying system using a fuel cell according to a second embodiment of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

Reference will now be made in detail to the preferred embodiments of the present invention, examples of which are illustrated in the accompanying drawings.

Hereinafter, a heating and hot-water supplying system using a fuel cell according to a second embodiment of the present invention will be explained with reference to the attached drawings.

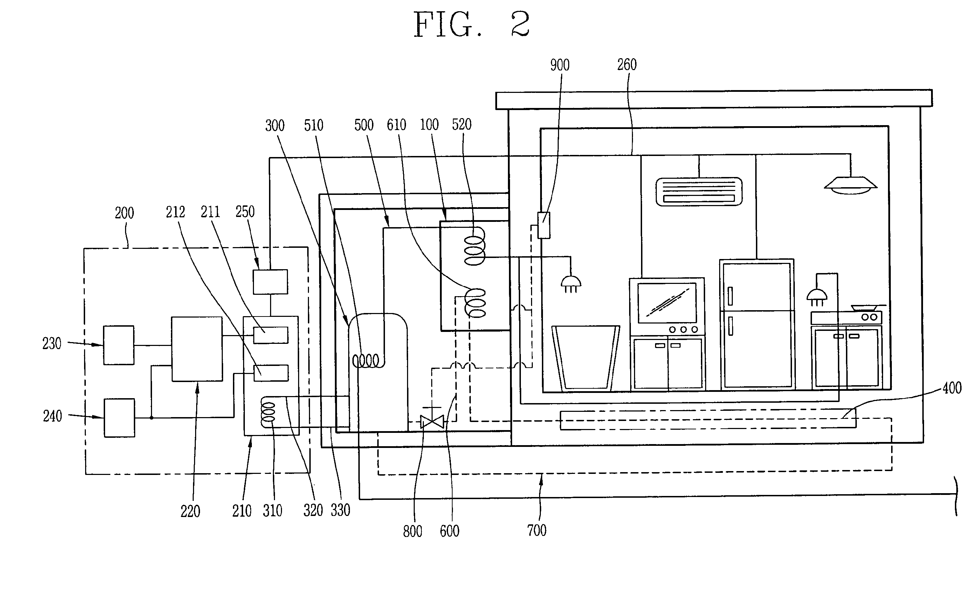

FIG. 2 is a piping diagram showing a heating and hot-water supplying system which utilizes a fuel cell according to a first embodiment of the present invention.

As shown in FIG. 2, the heating and hot-water supplying system according to a first embodiment, includes a boiler 100 and a fuel cell 200 installed in either one of a home or a building; a storage tank 300 which recollects reaction heat through a fluid and stores it, the reaction heat generated by an electrochemical reaction between a fuel and oxygen supplied to the fuel cell 200; a radiating unit 400 installed inside the home or the building; and a hot-water line 500 to which water is supplied from outside. The hot-water line supplies hot water into the home or the building via the boiler 100 and the storage tank 300. The system may include a heated fluid supplying line 600 which connects the storage tank 300, the boiler 100, and the radiating unit 400 to one another so that the fluid inside the storage tank 300 can be supplied to the radiating unit 400 via the boiler 100; a recollecting line 700 which connects the radiating unit 400 and the storage tank 300 to each other, so that fluid which emits heat in the radiating unit 400 may be introduced into the storage tank 300; and a flow amount controlling unit 800 which controls a fluid flow through the heated fluid supplying line 600.

The boiler 100 heats water by using combustion heat generated after combusting, for example, a gas or an oil.

The fuel cell 200 may continuously generate electric energy while fuel and oxygen are supplied thereto, thereby generating heat and water as byproducts. However, it should be appreciated that various types of fuel cells may be used as the fuel cell 100.

FIG. 2 shows a general fuel cell in accordance with the related art. The fuel cell 200 includes a stack 210 that has an anode 211 and a cathode 212 for generating electric energy and a byproduct by an electrochemical reaction between hydrogen supplied to the anode 211 and oxygen supplied to the cathode 212. Further, the fuel cell 200 may include a reformer 220 for refining hydrogen after receiving a hydrogen-contained fuel, thereby supplying the hydrogen to the anode 211 of the stack 210; a fuel supplying unit 230 for supplying a hydrogen-contained fuel to the reformer 220; an air supplying unit 240 for supplying air to the reformer 220 and the cathode 212 of the stack 210; and an electricity output unit 250 for converting electric energy generated from the stack 210 to a commercial power.

As the fuel, a hydrocarbon-based fuel such as LNG, LPG, or CH₃OH may be used. The fuel may undergo a desulfurizing process, a reforming process, and a hydrogen refining process in the reformer 220. The refined hydrogen may be supplied to the anode 211 of the stack 210.

A fluid may be contained in the storage tank 300, and water may be used as the fluid. Further, the storage tank 300 may be covered with an insulating material.

In one embodiment for storing heat generated from the stack 210 of the fuel cell 200 to the storage tank 300, there may be provided a first heat exchanging unit 310 at the stack 210 of the fuel cell 200. The heat exchanging unit 310 may serve to heat exchange the fluid inside the storage tank 300 at the stack 210 of the fuel cell 200, and then to introduce the fluid to the storage tank 300, repeatedly. One side of the heat exchanging unit 310 may be connected to the storage tank 300 by an inlet line 320, and another side of the heat exchanging unit 310 may be connected to the storage tank 300 by an outlet line 330.

The radiating unit 400 may be arranged inside a floor of a home or a building as a curved line. Preferably, the curved line is implemented as a zigzag form. However, it should be appreciated that the curved line may be constructed in any suitable form.

The hot-water line 500 has a certain length, and may arranged so that one side thereof can be connected to a conduit for supplying tap water into a building and another side thereof can supply hot water to, e.g., a lavatory or a kitchen of the building. Also, a second heat exchanging unit 510 may be provided at one side of the hot-water line 500, and positioned in the storage tank 300. Further, a third heat exchanging unit 520 may be provided at another side of the hot-water line 500, and positioned in the boiler 100. The third heat exchanging unit 520 may be arranged in the boiler 100 so as to be exposed to combustion heat of a burner (not shown) of the boiler 100. The hot-water line 500 may supply hot water by mixing tap water supplied to an additional conduit which is connected to an inside of the building.

The heated fluid supplying line 600 may have a predetermined length. In this regard, one side of the heated fluid supplying line 600 may be connected to the storage tank 300, and another side thereof may be connected to the radiating unit 400. Further, a fourth heat exchanging unit may be provided at one side of the heated fluid supplying line 600, and be positioned in the boiler 100. The fourth heat exchanging unit 610 may be arranged in the boiler 100 so as to be exposed to combustion heat of a burner (not shown) of the boiler 100.

The recollecting line 700 may have a predetermined length. One side of the recollecting line 700 may be connected to the radiating unit 400, and another side thereof may be connected to the storage tank 300.

Preferably, the flow amount controlling unit 800 may be mounted at the heated fluid supplying line 600 so as to be positioned between the storage tank 300 and the boiler 100. Additionally, the flow amount controlling unit 800 may be connected to a controlling unit 900 provided in a building, and may be controlled by the controlling unit 900. The controlling unit 900 may be connected to the boiler 100.

A pump (not shown) for forcibly flowing a fluid may be provided at the heated fluid supplying line 600. Preferably, the pump is installed between the fourth heat exchanging unit 610 and the radiating unit 400. However, it should be appreciated that the pump may be installed at any suitable location.

The boiler 100 may heat either one of the third heat exchanging unit 520 or the fourth heat exchanging unit 610, or both the third heat exchanging unit 520 and the fourth heat exchanging unit 610.

Electric energy generated from the fuel cell 200 may be converted into a commercial power by the electricity output unit 250, and then may be supplied not only to home electric appliances (e.g., a refrigerator, an air conditioner, a washing machine, a television), but also to installations such as lighting devices.

Additionally, reference numeral 260 denotes a power supplying line for supplying electric energy generated from the fuel cell to home electric appliances and lighting devices. However, it should be appreciated that the electric energy may be applied to any suitable installation.

Hereinafter, an operation of the heating and hot-water supplying system using a fuel cell will be explained.

The fuel cell 200 may be operated so as to supply power to electric appliances and lighting devices installed in a home or a building. The boiler 100 may be operated to heat one of the home or the building, and may be selectively operated for supplying hot water to the home or the building. In this regard, reaction heat generated by the fuel cell 200 may be used for heating and hot-water supply. The operation will be explained in more detail below.

A fuel may be supplied to the reformer 220 through the fuel supplying unit 230, and the reformer 220 may refine, e.g., hydrogen and supply the refined hydrogen to the anode 211 of the stack 210. Also, air may be supplied to the reformer 220 through the air supplying unit 240, and may be supplied to the cathode 212 of the stack 210. Further, hydrogen supplied to the anode 211 of the stack 210 may be electrochemically reacted with oxygen supplied to the cathode 212 at the stack 210, thereby generating electric energy, reaction heat, and water as byproducts.

Electric energy generated from the stack 210 of the fuel cell 200 may be supplied to electric appliances or lighting devices installed in a home or a building through the electricity output unit 250. Heat generated from the fuel cell 200 may be stored in the storage tank 300 through the fluid of the storage tank 300 circulating through the inlet line 320, the first heat exchanging unit 310, and the outlet line 330.

At the time of heating inside of a building, the flow amount controlling unit 800 may be controlled by the controlling unit 900 so that the fluid inside the storage tank 300 can flow to the radiating unit 400 through the heated fluid supplying line 600. While the fluid flows through the radiating unit 400, it emits heat outwardly. Thus, when a temperature of the fluid flowing through the heated fluid supplying line 600 is lower than a preset temperature, the fluid flowing in the fourth heat exchanging unit 610 may be heated by operating the boiler 100. Further, when the fluid inside the storage tank 300 has a temperature less than a preset temperature, heat emitted from the radiating unit 400 may be controlled by the control amount controlling unit 800.

The fluid having emitted heat outwardly while flowing through the radiating unit 400 may be introduced into the storage tank 300 through the recollecting line 700 (which may be repeated). Accordingly, not only an indoor floor, but also indoor air may be heated by the emitted heat. When the radiating unit 400 is positioned at one side of an indoor room, the indoor air may be heated by heat emitted from the radiating unit 400.

When the indoor room of a home or a building is not to be heated, heating of the fourth heat exchanging unit 610 by the boiler 100 is stopped, and flowing of the fluid inside the storage tank 300 to the heated fluid supplying line 600 may be blocked by controlling the flow amount controlling unit 800.

At the time of using hot water in, e.g., a lavatory or a kitchen of a home or a building, tap water from a conduit may be supplied thereto through the hot-water line 500. Additionally, the tap water flows through the hot-water line 500, and may be heated while passing through the second heat exchanging unit 510 inside the storage tank 300 and the third heat exchanging unit 520 inside the boiler 100. Then, the heated tap water may be supplied, e.g., to the lavatory or the kitchen. The tap water flowing through the hot-water line 500 may first be heated by the second heat exchanging unit 510. When the heated tap water has a temperature less than a preset temperature, it may be heated by the third heat exchanging unit 520 while the boiler 100 is operated.

In case of hot water supply, tap water may be heated to a high temperature by the third heat exchanging unit 520 of the hot-water line 500, accordingly, as the boiler 100 is operated.

In the present invention, electric energy generated by the fuel cell 200 may be used to operate electric appliances and lighting devices installed at a home or a building. Also, reaction heat generated from the fuel cell 200 as a byproduct may serve to heat an indoor room and to supply hot water together with combustion heat generated from the boiler 100. More concretely, at the time of heating the indoor room with a low temperature or supplying hot water of a low temperature, only reaction heat generated from the fuel cell 200 is used to heat the indoor room or to supply hot water. However, at the time of heating the indoor room with a high temperature or supplying hot water of a high temperature, reaction heat generated from the fuel cell 200 and combustion heat generated from the boiler 100 may be used to heat the indoor room or to supply hot water.

Since heat generated from the stack 210 may be recollected to the storage tank 300, and later to be outwardly emitted, the stack 210 is actively operated.

Since the fuel cell 200 generates electric energy, reaction heat, water, etc. after the electrochemical reaction between hydrogen and oxygen, pollutants are not caused.

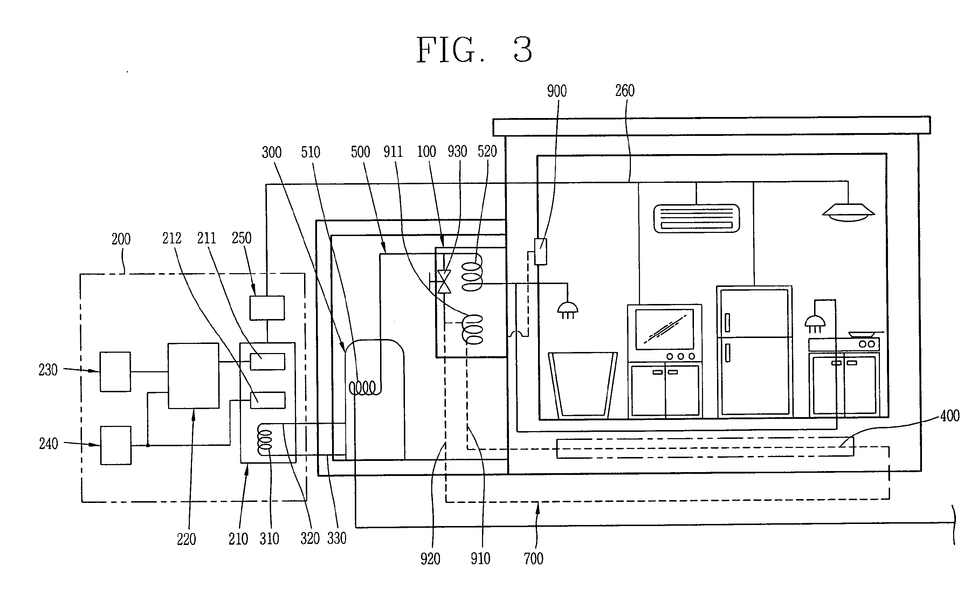

FIG. 3 is a piping diagram showing a heating and hot-water supplying system using a fuel cell according to a second embodiment of the present invention.

The same reference numerals were given to the same parts as those of the first embodiment, and thus their detailed explanation will be omitted.

As shown, the heating and hot-water supplying system using a fuel cell according to a second embodiment of the present invention, includes a boiler 100 and a fuel cell 200 installed in a home or a building; a storage tank 300 which recollects reaction heat through a fluid and stores it, the reaction heat generated by an electrochemical reaction between a fuel and oxygen supplied to the fuel cell 200; a radiating unit 400 installed in a floor of a home or a building; a hot-water line 500 to which water may be supplied from outside, and for supplying hot water to an installation, e.g., a lavatory or a kitchen of a home or a building via the boiler 100 and the storage tank 300; a first heat supplying line 910 which supplies a part of water flowing through the hot-water line 500 to the radiating unit 400 via the boiler 100; a returning line 920 which connects the radiating unit 400 and the first heat supplying line 910 to each other so that the fluid having passed the radiating unit 400 can be circulated via the boiler 100; and a switching unit 930 is configured to allow or cut-off the supply of water of the hot-water line 500 to the first heat supplying line 910.

The boiler 100, the fuel cell 200, the storage tank 300, and the hot-water line 500 have the same constructions as those aforementioned in the first embodiment.

The radiating unit 400 may be arranged inside a floor of a home or a building in the form of a curved line. Preferably, the curved line is implemented in a zigzag form. However, it should be appreciated that the radiating unit 400 may have various shapes, and may be installed at one side of an indoor room.

The first heat supplying line 910 may have a predetermined length. One side of the first heat supplying line may be connected to the hot-water line 500, and another side thereof may be connected to the radiating unit 400. A fifth heat exchanging unit 911 may be provided at one side of the first heat supplying line 910, and positioned in the boiler 100.

The returning line 920 may have a predetermined length. One side of the returning line 920 may be connected to the radiating unit 400, and another side thereof may be connected to the first heat supplying line 910. Accordingly, the first heat supplying line 910, the radiating unit 400, and the returning line 920 may form one circulation path.

The switching unit 930 may be mounted at the first heat supplying line 910 so as to be positioned between one connection portion and another connection portion, the one connection portion between the first heat supplying line 910 and the hot-water line 500 and another connection portion between the first heat supplying line 910 and the returning line 920. Preferably, the switching unit 930 is a switching valve. However, it should be appreciated that the switching unit may be provided in the form of any suitable switching mechanism. When the switching unit 930 is turned on, a fluid flowing through the hot-water line 500, that is, hot water may be contained in the first heat supplying line 910, the radiating unit 400, and the returning line 920. When the switching unit 930 is turned off, the fluid flowing through the hot-water line 500 may be prevented from flowing to the first heat supplying line 910. Additionally, if the amount of the fluid contained in the first heat supplying line 910, the radiating unit 400, and the returning line 920 is less than a preset temperature, the switching unit 930 may again be turned on to supply water to the first heat supplying line 910.

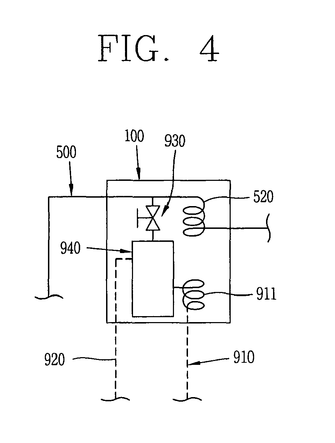

As shown in FIG. 4, a supplementary tank 940 for storing hot water supplied from the hot-water line 500 may be provided at the connection portion between the first heat supplying line 910 and the returning line 920. A preset amount of water is always contained in the supplementary tank 940. When the amount of the water contained in the supplementary tank 940 is less than a preset amount, the switching unit 930 may be turned on to partially supply water flowing through the hot-water line 500 into the supplementary tank 940. To the contrary, when the amount of the water contained in the supplementary tank 940 is more than a preset amount, the switching unit 930 may be turned off to prevent water flowing through the hot-water line 500 from flowing into the supplementary tank 940. Preferably, the supplementary tank 940 is positioned in the boiler 100. However, it should be appreciated that the supplementary tank may be positioned at any suitable location within the system.

The third heat exchanging unit 520 of the hot-water line 500 and the fifth heat exchanging unit 911 of the first heat supplying line 910, each positioned in the boiler 100 may be selectively heated by one or more burners provided in the boiler 100. The fifth heat exchanging unit 911 of the first heat supplying line 910 is heated according to an indoor preset temperature of a home or a building.

An operation of the heating and hot-water supplying system using a fuel cell according to a second embodiment will be explained.

The fuel cell 200 is operated so as to supply power to electric appliances and lighting devices installed at a home or a building. The boiler 100 is operated for heating of the home or the building, and is selectively operated for supplying hot water to the home or the building. Reaction heat generated from the fuel cell 200 is used for hot-water supply. The operation will be explained in more detail.

An operation of the fuel cell, an operation for supplying electric energy generated from the fuel cell 200 to a home or a building, an operation for storing reaction heat generated from the fuel cell 200 in the storage tank 300, and an operation for supplying hot water to a lavatory, a kitchen, etc. of a building are the same as those of the first embodiment.

At the time of heating inside of a building, the fifth heat exchanging unit 911 of the first heat supplying line 910 is heated by the boiler 100. Accordingly, water flowing through the fifth heat exchanging unit 911 is heated, and the heated water flows to the radiating unit 400 through the first heat supplying line 910.

Then, the water flows through the radiating unit 400, thereby outwardly emitting heat. Thus, the emitted heat may heat an inside of the home or the building. The water, having passed the radiating unit 400, flows to the fifth heat exchanging unit 911 of the first heat supplying line 910 through the returning line 920. The above process is repeated, thereby heating an inside of the home or the building.

When a home or a building has a preset indoor temperature, the heating of the fifth heat exchanging unit 911 is stopped. To the contrary, when the home or the building has a temperature less than the preset indoor temperature, the fifth heat exchanging unit 911 is heated by the boiler 100.

In the heating and hot-water supplying system which uses a fuel cell according to a second embodiment, electric energy generated from the fuel cell 200 is used to operate electric appliances and lighting devices installed at a home or a building. Also, the reaction heat generated from the fuel cell 200 as a byproduct serves to heat an indoor room and to supply hot water together with combustion heat generated from the boiler 100.

As discussed above, in the heating and hot-water supplying system using a fuel cell according to the present invention, electric energy generated from the fuel cell is used to operate electric appliances and lighting devices installed at a home or a building. Also, the reaction heat generated from the fuel cell as a byproduct and combustion heat generated from the boiler serve to heat an indoor room of a home or a building and to supply hot water. Accordingly, an operation time of the boiler may be reduced and a usage amount of oil or gas may be decreased, thereby decreasing an economic burden and preventing the occurrence of pollutants which may be harmful to the human body.

It is further noted that the foregoing examples have been provided merely for the purpose of explanation and are in no way to be construed as limiting of the present invention. While the present invention has been described with reference to a preferred embodiment, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims.

## Claims

1. A heating and hot-water supplying system comprising:
a boiler;
a fuel cell;
a storage tank that recollects and stores reaction heat generated by the fuel cell through a fluid;
a radiating unit installed inside either one of a home or a building where the boiler and the fuel cell are installed, wherein the radiating unit heats an indoor room;
a hot-water line to which water is supplied from outside, wherein the hot-water line supplies hot water into the home or the building via the boiler and the storage tank;
a heated fluid supplying line which connects the storage tank, the boiler, and the radiating unit to one another so that the fluid inside the storage tank is supplied to the radiating unit via the boiler;
a recollecting line which connects the radiating unit and the storage tank to each other so that the fluid heat-exchanged in the radiating unit is introduced into the storage tank; and
a flow amount controlling unit that controls a fluid flow through the heated fluid supplying line.

2. The heating and hot-water supplying system according to claim 1, wherein the radiating unit is arranged inside a floor of the home or the building, and is provided as a curved line.

3. The heating and hot-water supplying system according to claim 1, wherein a part of the hot-water line comes in contact with the fluid of the storage tank, thereby heat-exchanging the fluid flowing through the hot-water line with the fluid inside the storage tank.

4. The heating and hot-water supplying system according to claim 1, wherein the hot-water line is partially exposed to combustion heat of a burner of the boiler, thereby heating the fluid flowing through the hot-water line.

5. The heating and hot-water supplying system according to claim 1, wherein the heated fluid supplying line is partially exposed to combustion heat of a burner of the boiler, thereby heating the fluid flowing through the heated fluid supplying line.

6. The heating and hot-water supplying system according to claim 1, wherein the flow amount controlling unit is mounted at the heated fluid supplying line and positioned between the storage tank and the boiler.

7. The heating and hot-water supplying system according to claim 1, further comprising:
a first heat exchanger connected at one side to the storage tank by an inlet line, and connected at another side to the storage tank by an outlet line,
wherein the first heat exchanger is configured to exchange heat between fluid inside the storage tank and inside the fuel cell.

8. The heating and hot-water supplying system according to claim 7,
wherein water flowing through the hot-water line is heated while passing through a second heat exchanger provided in the storage tank and a third heat exchanger provided in the boiler.

9. The heating and hot-water supplying system according to claim 8,
wherein water flowing through the hot-water line is heated by the third heat exchanger, provided in the boiler, when the temperature of the water is less than a preset temperature.

10. A heating and hot-water supplying system comprising:
a boiler;
a fuel cell;
a storage tank that recollects and sores reaction heat generated by the fuel cell through a fluid;
a radiating unit installed inside a home or a building where the boiler and the fuel cell are installed, wherein the radiating unit heats an indoor room;
a hot-water line to which water is supplied from outside, wherein the hot-water line supplies hot water into the home or the building via the boiler and the storage tank;
a first heat supplying line which supplies a part of water flowing through the hot-water line to the radiating unit via the boiler;
a returning line which connects the radiating unit and the first heat supplying line to each other so that the fluid heat-exchanged in the radiating unit can be circulated via the boiler; and
a switching unit which is configured to allow or cut-off a supply of water of the hot-water line to the first heat supplying line.

11. The heating and hot-water supplying system according to claim 10, wherein a supplementary tank which stores hot water supplied from the hot-water line is provided at a connection portion between the first heat supplying line and the returning line.

12. The heating and hot-water supplying system according to claim 10, wherein the radiating unit is arranged inside a floor of the home or the building as a curved line.

13. The heating and hot-water supplying system according to claim 10, further comprising:
a first heat exchanger connected at one side to the storage tank by an inlet line, and connected at another side to the storage tank by an outlet line,
wherein the first heat exchanger is configured to exchange heat between fluid inside the storage tank and inside the fuel cell.

14. The heating and hot-water supplying system according to claim 13,
wherein water flowing through the hot-water line is heated while passing through a second heat exchanger provided in the storage tank and a third heat exchanger provided in the boiler.

15. The heating and hot-water supplying system according to claim 14,
wherein water flowing through the hot-water line is heated by the third heat exchanger, provided in the boiler, when the temperature of the water is less than a preset temperature.
